# EUROPÄISCHE PATENTSCHRIFT

(11) **EP 3 116 106 B1**
(45) Veröffentlichungstag und Bekanntmachung des Hinweises auf die Patenterteilung: **27.06.2018**
(21) Anmeldenummer: 15175845.5
(22) Anmeldetag: 08.07.2015
(51) Int. Cl.: H02K 5/20, H02K 5/24, H02K 9/06

(54) **ELEKTRISCHE MASCHINE MIT SCHALLDÄMMUNG**
ELECTRIC MACHINE COMPRISING SOUNDPROOFING
MACHINE ÉLECTRIQUE AVEC INSONORISATION

(43) Veröffentlichungstag der Anmeldung: 11.01.2017
(73) Patentinhaber: Siemens Aktiengesellschaft, 80333 München (DE)
(72) Erfinder: Eichinger, Benjamin, 90610 Winkelhaid (DE)

(56) Entgegenhaltungen:
- EP-A2- 2 549 629
- WO-A1-00/48293
- DE-A1-102012 100 038
- JP-A- 2009 278 809

## Beschreibung

Die Erfindung betrifft eine elektrische Maschine. Ein Beispiel für eine elektrische Maschine ist eine dynamoelektrische Maschine. Eine derartige elektrische Maschine ist beispielsweise ein elektrischer Motor oder Generator.

Elektrische Maschinen können bauartbedingt teilweise sehr hohe Geräusche verursachen. Diese Geräusche entstehen beispielsweise durch eine elektromagnetische Anregung oder durch die Luftströmung des Kühlkreislaufes. Geräusche können gegebenenfalls durch eine entsprechende elektrische Auslegung der Maschine reduziert werden. Es kann beispielsweise versucht werden Resonanzfrequenzen nicht anzuregen. Dabei handelt es sich um eine primäre Maßnahme zur Schallminderung.

Aus der EP 2 549 629 A2 ist eine elektrische Maschine bekannt, welche einen Mantel zur Unterdrückung von Geräuschen und Vibrationen aufweist.

Auch aus der JP 2009278809 ist eine elektrische Maschine mit einem umschließenden Mantel bekannt.

Eine Aufgabe der Erfindung ist es eine weitere Möglichkeit der Reduzierung von Geräuschen der elektrischen Maschine anzugeben. Eine Lösung der Aufgabe gelingt bei einer elektrischen Maschine nach Anspruch 1 und bei einem Mantel für eine elektrische Maschine nach Anspruch 10. Weitere Ausgestaltungen der elektrischen Maschine sowie des Mantels ergeben sich nach den Ansprüchen 2 bis 9 bzw. 11 bis 13.

Geräusch können nicht nur durch primäre Maßnahmen reduziert oder verhindert werden, sondern auch durch sekundäre Maßnahmen der Schallminderung. Derartige Maßnahmen sind wenn möglich einfach und günstig auszuführen.

Eine elektrische Maschine weist insbesondere zur Kühlung des Stators der elektrischen Maschine Kühlrippen auf. Eine Vielzahl von Kühlrippen sind insbesondere in axialer Richtung über einem Umfang eines Statorgehäuses verteilt. Ein Kühlkanal ist durch zumindest zwei Kühlrippen und einem Mantel der elektrischen Maschine ausgebildet. Durch den Kühlkanal bzw. durch eine Vielzahl von derart ausgebildeten Kühlkanälen ist ein Fluid, wie z.B. Luft, führbar. Durch den Mantel kann Schall, welcher von dem Stator und/oder Rotor und/der einem Lager erzeugt wird gedämpft werden.

In einer Ausgestaltung der elektrischen Maschine weist der Mantel ein Material auf, welches vibrationsabsorbierend ist. Somit werden Vibrationen gedämpft, so dass durch weniger Vibrationen des Mantels Geräusche der elektrischen Maschine reduziert werden.

In einer Ausgestaltung der elektrischen Maschine weist der Mantel ein Material auf, welches schallabsorbierend ist. So kann Schall, welcher z.B. auf eine Innenseite des Mantels trifft zumindest teilweise absorbiert werden. Damit wird der absorbierte Schall nicht zu einer Außenseite des Mantels übertragen, so dass Geräusche der elektrischen Maschine nicht mehr ungedämpft an die Umgebung abgegeben werden.

In einer Ausgestaltung der elektrischen Maschine ist der Mantel dicker als der Abstand zwischen den Kühlrippen. Der Abstand betrifft dabei den regelmäßigen Abstand der in Umfangsrichtung des Statorgehäuses regelmäßig angeordneten Kühlrippen. Je dicker der Mantel ist, desto größer kann die erzielte Geräuschreduktion sein.

In einer Ausgestaltung der elektrischen Maschine ist ein innerer Durchmesser des Mantels kleiner als ein äußerer Durchmesser, welcher von den Kühlrippen gebildet ist. So kann eine feste Positionierung des Mantels auf den Kühlrippen erzielt werden. Das Merkmal des Durchmessers betrifft hier wie auch im Weiteren entsprechend auch den jeweiligen Radius. Dabei ist der Mantel, wie auch die Anordnung der Kühlrippen insbesondere zumindest teilweise zylinderförmig.

In einer Ausgestaltung der elektrischen Maschine ist der Mantel auf Kühlrippen der elektrischen Maschine aufgepresst. Zur Ausübung eine Presskraft des Mantels auf die Kühlrippen ist insbesondere ein elastisches Material vorgesehen. Dieses elastische Material weist beispielsweise einen Gummi auf. Das elastische Material kann ringförmig in den Mantel integriert sein. Durch Verwendung einer Presspassung kann eine einfache und preisgünstige Befestigung des Mantels erzielt werden. Durch die Verwendung des elastischen Materials kann es zusätzlich zu einer weiteren Geräuschdämpfung kommen.

In einer Ausgestaltung der elektrischen Maschine weist diese einen axial angeordneten Lüfter auf, wobei der Mantel den Lüfter umgibt. Der Lüfter ist beispielsweise ein Eigenlüfter oder auch ein Fremdlüfter. Um die Funktion des Lüfters einer luftgekühlten elektrischen Maschine zu verbessern, weist dieser eine Einhausung auf. Die Einhausung kann in Form einer Haube ausgebildet sein. Die Haube ermöglicht bzw. verbessert die Funktion eines Lüfterrades. Dies ist auch von der Lüfterart abhängig. Die Haube ummantelt das Lüfterrad und bildet somit einen Mantel für den Lüfter. Dieser Mantel kann die Effizienz des Lüfters verbessern sowie die Schutzart beeinflussen (z.B. Schutz vor Eingreifen). Der Mantel des Lüfters (Lüftermantel) weist zur Geräuschreduktion ein Material auf, welches die Geräuschemission durch die elektrische Maschine reduziert.

Bei elektrischen Maschinen mit Kühlrippen, also bei rippengekühlten elektrischen Maschinen, wird die Luft nach dem Lüftermantel zur Verbesserung der Kühlleistung weiter geführt. Damit kann vermieden werden, dass es bei manchen sonst konstruktiv bedingten Strömungshindernissen zur Ablösung des Kühlluftstroms und so zu einer verminderten Kühlung kommt. Ist der Luftstrom im Bereich des Lüfters zu laut, können Schalldämpfer an den Lüftermantel montiert sein.

Zur Geräuschminderung weist die elektrische Maschine einen Mantel um den Statorbereich der elektrischen Maschine auf. Dieser Statormantel kann einteilig mit dem Lüftermantel verbunden sein. In einer weiteren Ausgestaltung kann eine Kombination aus Statormantel und Lüftermantel auch zumindest zweiteilig sein. Der Statormantel kann auf den Lüftermantel geklebt, geschraubt, gesteckt, genietet, etc. sein. Ist der Statormantel mit dem Lüftermantel lösbar verbunden, so kann beispielsweise im Fall einer Reparatur des Lüfters oder im Fall des Austausches des Lüfters der Lüftermantel von der elektrischen Maschine entfernt werden, ohne den Statormantel von der elektrischen Maschine zu entfernen.

Ist der Mantel bezüglich des Lüfterbereichs und des Statorbereichs einteilig ausgeführt, so kann der Mantel als eine Art aufsteckbare Haube, welche sich über die gesamte Maschine erstreckt, aufgesetzt werden. Dieser Mantel ersetzt dann eine sonst übliche nicht schallgedämpfte Haube (z.B. nur aus Blech gefertigt) des Lüfters und übernimmt deren Eigenschaften. Zusätzlich wird durch den Mantel die Kühlluft in Achsrichtung über die gesamte elektrische Maschine geführt. Ein Ablösen des Kühlluftstroms im Bereich der Kühlrippen am Statorgehäuse ist so nicht mehr möglich.

Der Aufbau des Lüftermantels sorgt für die Absorption des entstandenen Luftschalls, sowie für eine anteilige Dämmung des nicht absorbierten Luftschalls. Ein zusätzlicher Schalldämpfer am Lüfter kann entfallen oder zusätzlich vorgesehen sein um die schalldämmende Wirkung zu verbessern.

Der mehrteilige Aufbau des Mantels mit einem Lüftermantel und einem Statormantel ermöglicht eine einfache Montage. Mit diesem mehrteiligen Aufbau ist auch eine Entkopplung des Lüftermantels von der Maschinenstruktur ohne zusätzliche Maschinenelemente möglich. Mit der Entkoppelung ist bei Einhausungen der elektrischen Maschine eine gute Geräuschdämmung zu erreichen. Erfindungsgemäß weist die elektrische Maschine Tragstrukturen auf. Tragstrukturen dienen der Befestigung und/oder dem Transport der elektrischen Maschine. Eine Tragstruktur kann z.B. eine Gewindebohrung aufweisen, in welche eine Öse zum Transport der elektrischen Maschine einschraubbar ist. Durch die Tragstruktur kann eine sich wiederholende Anordnung von Kühlrippen unterbrochen sein. Um die Kühlung der elektrischen Maschine dadurch nicht unnötig zu verschlechtern weist die elektrische Maschine zwischen den Tragstrukturen und dem Mantel um das Statorgehäuse eine Passage auf. Zumindest einer der Tragstrukturen bildet mit dem Mantel eine Passage für ein Kühlfluid aus. Damit ist es möglich Kühlfluid wie Kühlluft an der Tragstruktur vorbei zu leiten.

Weist die Tragstruktur Formen auf, welche über den Radius der Kühlrippen hinaus gehen, so weist der Mantel im Bereich des Stators beispielsweise eine Ausnehmung auf, um Platz für die Tragstruktur zu schaffen. Derartige Ausnehmungen können durch einen Deckel geschlossen werden. Durch den Deckel wird verhindert, dass ungewollt Schall aus der Ausnehmung austritt. Erfindungsgemäß weist die elektrische Maschine also einen Mantel mit einem Deckel im Bereich der Tragstrukturen auf. Der Deckel weist eine innere Leitfahne auf. Mittels der inneren Leitfahne kann die Kühlluft zu einer Kühlrippe gelenkt werden. Dies ist beispielsweise dann notwendig, wenn durch die Tragstruktur ein Kühlluftstrom von einer Kühlrippe abgelöst wurde. Die Leitfahne kann beispielsweise als ein Luftleitblech ausgeführt sein.

In einer Ausgestaltung der elektrischen Maschine weist diese einen Lüftermantel, einen Schalldämpfer, einen Statormantel und Luftleitbleche auf. Damit kann eine gute Kühlung wie auch eine Dämpfung der Schallemission erzielt werden. In einer Ausgestaltung der elektrischen Maschine sind Lüftermantel, Schalldämpfer, Statormantel und Luftleitbleche in einem Bauteil integriert. Durch die Möglichkeit, den Mantel als eine Art Haube einfach über die elektrische Maschine zu stecken, wird besonders bei Rippenmaschinen (also bei elektrischen Maschinen mit Kühlrippen) eine motorfeste Schalldämmung möglich. Dies kann dazu beitragen die Herstellkosten zu reduzieren, da die Erstellung von Einzelteilen und der Montageaufwand reduziert werden. Die beschriebenen Ausgestaltungen der elektrischen Erfindung wirken geräuschreduzierend und führen weiterhin zu einer effizienteren Kühlung.

In einer Ausgestaltung der elektrischen Maschine weist der Mantel Polyurethan auf. Polyurethan kann geschäumt geräuschreduzierend wirken.

In einer Ausgestaltung der elektrischen Maschine ist der Mantel einschichtig aufgebaut. Damit vereinfacht sich dessen Herstellung. In einer weiteren Ausgestaltung der elektrischen Maschine weist der Mantel eine Außenschicht und eine Dämmschicht auf. Die Außenschicht ist im Vergleich zur Dämmschicht dünner und härter. Durch die härtere Außenschicht ist die elektrische Maschine vor Beschädigungen des Mantels besser geschützt.

Ein Mantel für eine elektrische Maschine ist derart ausgebildet, dass dieser über die elektrische Maschine insbesondere gestülpt, geschoben bzw. geklappt werden kann. Der Mantel ist derart ausgeführt, dass durch diesen zumindest ein Kühlkanal durch die Kühlrippen der elektrischen Maschine und durch den Mantel ausbildbar ist.

Der Mantel weist beispielsweise ein Material auf, welches vibrationsabsorbierend ist. Grundsätzlich kann der Mantel so ausgebildet sein, wie dies obig bereits im Zusammenhang mit der elektrischen Maschine beschrieben ist.

Der Mantel weist in einer Ausgestaltung zur Ausübung einer Presskraft ein elastisches Material insbesondere Gummi auf. Der Mantel weist in einer weiteren Ausgestaltung eine hohlzylindrische Form auf. Dabei kann er eine erste kreisförmige Öffnung aufweisen, welche kleiner ist als eine zweite kreisförmige Öffnung. Derart kann der Mantel über ein Gehäuse mit Kühlrippen geschoben werden und an einem Ende eine Art Hülle für einen Lüfter ausbilden.

Der Mantel kann auch als eine Art Nachrüstsatz für bereits im Feld befindliche Maschinen ausgebildet sein und als solcher ggf. verkauft werden.

Im Folgenden wird die Erfindung anhand von Figuren exemplarisch näher erläutert. Dabei zeigt:
- FIG 1: eine elektrische Maschine mit einem Mantel;
- FIG 2: eine elektrische Maschine mit einem aufgeschnittenen Mantel in transparenter Darstellung;
- FIG 3: im Ausschnitt einen Mantel auf Kühlrippen eines Statorgehäuses;
- FIG 4: elastische Elemente zur Positionierung des Mantels auf den Kühlrippen;
- FIG 5: eine elektrische Maschine mit einem Deckel über einer Tragstruktur und
- FIG 6: die elektrische Maschine mit Leitfahnen für Kühlluft bei Tragstrukturen.

Anhand der Erläuterungen der Figuren, wie auch aus den Unteransprüchen, sind weitere erfindungswesentliche Einzelheiten entnehmbar.

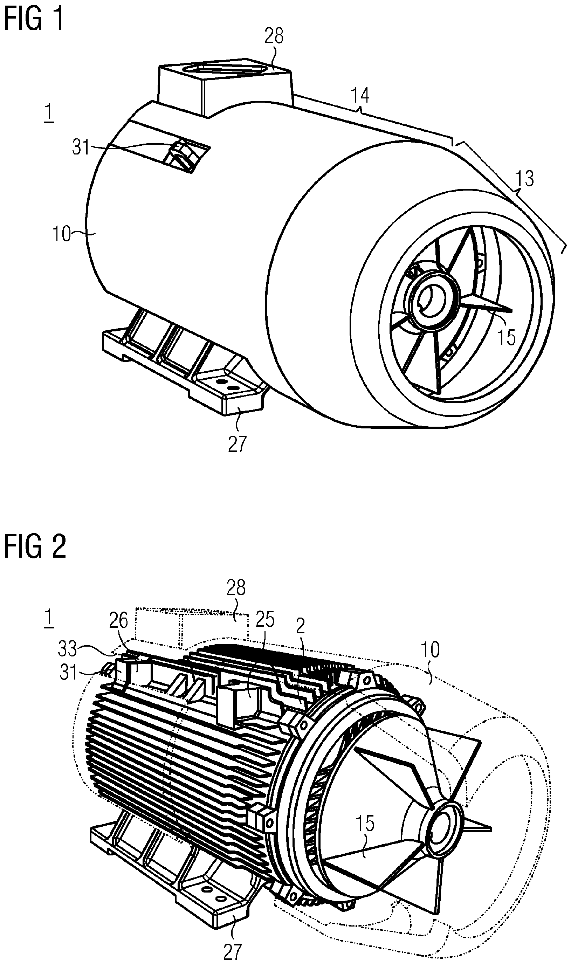

FIG 1 zeigt ein erstes Ausführungsbeispiel einer rippengekühlten elektrischen Maschine 1. Die elektrische Maschine 1 kann von einem axial angeordneten Lüfter 15 zur Kühlung mit einem Kühlmedium zwangsbeströmt werden. Der Lüfter 15 enthält beispielsweise ein angetriebenes Lüfterrad zum Fördern des Kühlmediums und eine radial endseitig das Lüfterrad umgebende Lüfterhaube. Die Lüfterhaube führt das Kühlmedium und verbessert somit die Effizienz der Kühlung. Die Lüfterhaube kann zudem als Schutz für Personen vor dem rotierenden Lüfterrad dienen und/oder das Lüfterrad selbst schützen.

Zum Führen des Kühlmediums entlang der elektrischen Maschine 1 nach Verlassen des Lüfters 15 umgibt ein Mantel 10 die elektrische Maschine 1. Durch die Führung des Kühlmediums mittels des Mantels 10 wird eine Ablösung der Strömung von der Oberfläche der elektrischen Maschine 1 verhindert.

Der Mantel 10 umschließt zumindest einen Teil der elektrischen Maschine 1 und optional einen Teil des Lüfters 15 am Umfang. Gemäß FIG 1 ist der Mantel 10 im Wesentlichen zweigeteilt in die Teile Lüftermantel 13 und Statormantel 14. Der Statormantel 14 umfasst einen Teil der elektrischen Maschine 1 am Umfang. Der Lüftermantel 13 dient ebenso wie der Statormantel 14 der Dämmung und Absorption von Schall und der Führung des Kühlmediums. Der Schall kann beispielsweise vom Lüfter 15, der elektrischen Maschine 1 oder von der Strömung des Kühlmediums verursacht werden oder durch Vibrationen hervorgerufen werden. Der Lüftermantel 13 umgibt den Lüfter 15 am Umfang und kann teilweise oder gänzlich die Funktionen der Lüfterhaube übernehmen und/oder die Lüfterhaube ersetzen. Ein zusätzlicher Schalldämpfer am Lüfter kann entfallen, da der Mantel 10 dessen Funktion übernehmen kann.

Ein Schalldämpfer am Lüfter zusätzlich zum Mantel 10 kann die Schalldämpfung erhöhen. Durch den geteilten Aufbau des Mantels 10 gemäß FIG 1 ist eine einfach zu handhabende Montage und Wartung möglich. Bei Wartungs- oder Reparaturarbeiten am Lüfter 15 muss der Statormantel 14 nicht abgenommen werden, da der Lüftermantel 13 lösbar mit dem Statormantel 13 verbunden ist.

Um die Lärmbelastung beispielsweise am Arbeitsplatz zu senken, können laute Maschinen durch zusätzliche, externe Einhausungen am Aufstellort gekapselt werden. Auch maschinenfeste Kapseln können angefertigt werden. Fehlen Anbauflächen oder Anschraubpunkte, kann eine Konstruktion mit dem Mantel 10 helfen. Durch den von der Maschinenstruktur entkoppelten Aufbau des Mantels 10 kann eine bessere Geräuschdämmung erzielt werden als beispielsweise bei verschraubten Einhausungen. Zur Minderung von Lärm und Vibrationen der elektrischen Maschine 1 und des Lüfters 15 weisen Teile des Materials des Mantels 10 schallabsorbierende und/oder vibrationsabsorbierende Eigenschaften auf. Durch die Integration der Lüfterhaube in den Mantel 10 dient der Mantel 10 gleichzeitig als Schalldämpfer für den Lüfter 15.

Zum Transport der elektrischen Maschine 1 ist am Gehäuse der elektrischen Maschine 1 eine Transportöse 31 angebracht. Die elektrische Maschine 1 kann über einen Standfuß 27 an eine nicht dargestellte Bodenplatte befestigt werden. Im Bereich des Standfußes 27, im Bereich einer Klemmvorrichtung 28 und/oder im Bereich der Transportöse 31 sind Aussparungen im Mantel 10 vorgesehen. An einigen oder allen ausgesparten Stellen kann das schallabsorbierende Material des Mantels 10, das verformbar sein kann, überstehen. Das überstehende schallabsorbierende Material des Mantels 10 kann bei der Montage verformt werden und bringt zusätzliche Schallabdichtung. Der Mantel 10 wird beispielsweise axial auf die elektrische Maschine 1 aufgeschoben und wird beispielsweise durch Pressung des Materials des Mantels 10 auf ein in FIG 2 dargestelltes Statorgehäuse 22 an der elektrischen Maschine 1 fixiert.

Weitere Methoden zur Montage beziehungsweise Befestigung des Mantels 10 auf die elektrische Maschine 1 sind denkbar. Der Mantel 10 kann so gestaltet sein, dass er in axialer Richtung von einer Stirnseite bis zu einer Rückseite des Mantels 10 durchtrennt ist. Dadurch kann der Mantel 10 elastisch aufgebogen und somit auf die elektrische Maschine 1 gesteckt werden. Die Pressung des Mantels 10 auf das Statorgehäuse 22 erfolgt beispielsweise aufgrund der elastischen Verformung bei der Montage.

Eine weitere Methode zur Montage bzw. Befestigung des Mantels 10 ist durch Teilung des Mantels 10 denkbar. Der im Wesentlichen rotationssymmetrische Mantel 10 kann neben der Unterteilung in Statormantel 14 und Lüftermantel 13 noch in weitere Teilstücke unterteilt werden. Die Teilstücke sollen dabei größtenteils nicht im Wesentlichen rotationssymmetrisch sondern eher flächig sein. Die Teilstücke des Mantels 10 können auf die elektrische Maschine 1 aneinander gelegt werden, um die elektrische Maschine 1 zu ummanteln. Die Teilstücke können untereinander beispielsweise lösbar und/oder nicht lösbar gefügt werden. Die Pressung des Mantels 10 auf das Statorgehäuse 22 kann gegebenenfalls durch zusätzliche Maßnahmen wie beispielsweise einer den Mantel 10 umfassende Schnürung oder eines Zurrgurtes verstärkt werden.

FIG 1 wie auch FIG 2 zeigen zwei Ausführungsbeispiele für rippengekühlte Maschinen. Die Haube umschließt die gesamte Maschine am Umfang. Die Lüfterhaube wird durch die Haube ersetzt. Im Fußbereich und im Bereich der Hebevorrichtung sind Aussparungen in der Haube. An den ausgesparten Stellen steht der Absorber stark über - das weiche Material lässt sich bei der Montage verformen und bringt zusätzliche Schallabdichtung. Die Haube, also der Mantel der Maschine, wird axial aufgeschoben und hält durch Pressung des Absorberschaumes. Durch die Integration der Lüfterhaube ist die Haube gleichzeitig Schalldämpfer für den Lüfter.

FIG 2 zeigt die rippengekühlte elektrische Maschine 1 gemäß FIG 1 mit einer Tragstruktur 25, 26 anstelle der Transportöse 31 und mit Kühlrippen 2. Der Lüfter 15 ist axial angeordnet. Der Mantel 10 wird teilweise aufgebrochen dargestellt. Der Mantel 10 ist gemäß FIG 2 im Wesentlichen einteilig ausgeführt. Der Mantel 10 erstreckt sich axial von seiner Stirnseite über den Lüfter 15 und/oder der elektrischen Maschine 1 bis zu der Rückseite des Mantels 10.

Das Kühlmedium kann von einer Lüfterhaube des Lüfters 15 geführt werden. Um das Kühlmedium gezielt auf die elektrische Maschine 1 zu lenken, umgibt ein Mantel 10 die elektrische Maschine 1. Der Mantel 10 ist so angeordnet, dass das Kühlmedium Kühlkanäle 7 durchströmen kann. Die Kühlkanäle 7 sind durch den Mantel 10 und den Kühlrippen 2 ausgebildet. Der Mantel 10 kann die Lüfterhaube ersetzen oder die Lüfterhaube umrahmen. Neben den Funktionen der Lüfterhaube kann der Mantel 10 im Bereich des Lüfters zusätzlich schallmindernd wirken.

Der Mantel 10 kann mindestens abschnittsweise die elektrische Maschine 1 als auch den Lüfter 15 am Umfang umfassen. Der Mantel 10 kann einteilig auf die elektrische Maschine 1 aufgezogen werden.

Im Bereich der Tragstrukturen 25, 26 weist der Mantel 10 Aussparungen 33 auf. Zur Reduktion des Schalls und um die Strömung des Kühlmediums zu führen, werden mit einem nur teilweise dargestellten Deckel 34 die Aussparungen 33 im Mantel 10 im Bereich der Tragstruktur 25, 26 und zwischen den Tragstrukturen 25, 26 geschlossen. An den Kanten der Aussparungen im Bereich des Standfußes 27 und des Klemmkastens 28 kann Material des Mantels 10 überstehen, um dort dicht abzuschließen.

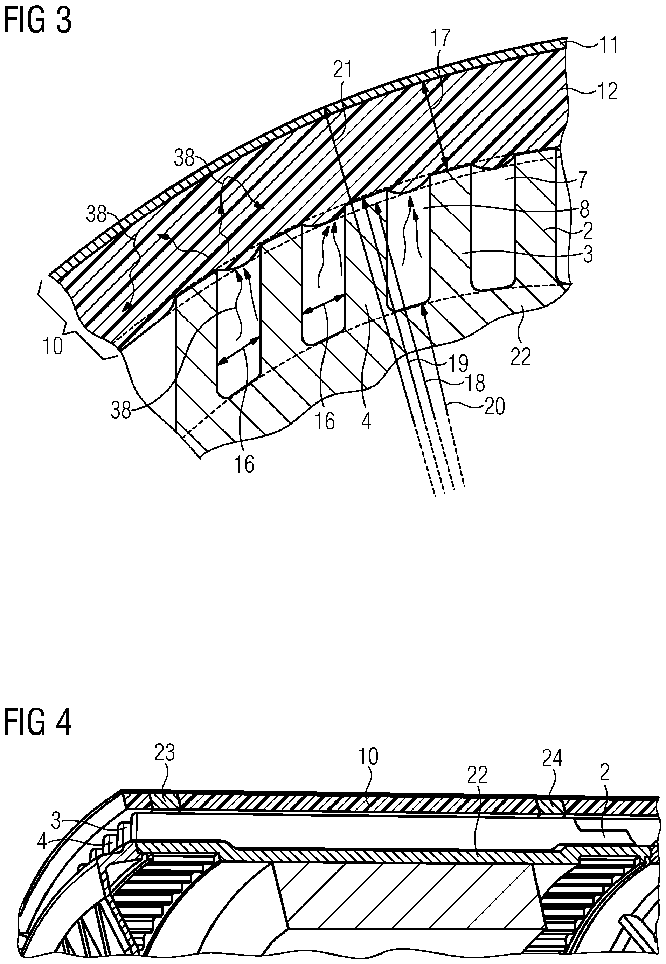

FIG 3 zeigt im Ausschnitt den Aufbau des montierten Mantels 10 und das Statorgehäuse 22 im Bereich der Kühlrippen 2, 3, 4 in einem Schnitt senkrecht zur Rotorwelle der elektrischen Maschine 1. Der Mantel 10 enthält eine Außenschicht 11 und eine Dämmschicht 12. Die Außenschicht 11 des Mantels 10 kann abhängig von mechanischen und akustischen Anforderungen etwa aus Metall, Kunststoff oder Verbundwerkstoff (z.B. Bondal oder Stahlblech mit Bitumenschicht) bestehen oder diese Materialien aufweisen. Die Dämmschicht 12 kann beispielsweise ein geschäumtes Material wie etwa Polyurethan sein oder ähnlich zu Steinwollematten beschaffen sein. Das Material der Dämmschicht 12 kann deformierbar und/oder elastisch sein.

Das Statorgehäuse 22 enthält die Kühlrippen 2, 3, 4. Die Höhe der Kühlrippen 2, 3, 4 im dargestellten Teilbereich des Statorgehäuses 22 der FIG 3 kann durch die Differenz eines äußeren Radius 19 der Kühlrippen und eines inneren Radius 20 der Kühlrippen 2, 3, 4 beschrieben werden. Die Kühlrippen 2, 3, 4 und die Dämmschicht 12 begrenzen die Kühlkanäle 7, 8. Die Breite der Kühlkanäle 7, 8 ergibt sich demnach aus den Abstand 16 der einzelnen Kühlrippen 2, 3, 4 zueinander.

Der Mantel 10 erstreckt sich beispielsweise gemäß FIG 3 radial im nicht montierten und daher ungepressten Zustand vom äußeren Radius 21 des Mantels 10 bis etwa zum inneren Radius 18 des Mantels 10. Der Mantel 10 kann durch Pressung auf der elektrischen Maschine 1 befestigt werden, indem der innere Radius 18 des Mantels 10 kleiner gewählt wird als der äußere Radius 19 der Kühlrippen 2, 3, 4.

Der Mantel 10 ist zur Dämpfung von niederfrequentem Schall möglichst dick zu dimensionieren. Der Mantel 10 kann beispielsweise zur besseren Geräuschreduktion dicker als der Abstand 16 der Kühlrippen 2, 3, 4 zueinander sein. Der Sitz des Mantels 10 auf dem Statorgehäuse 22 der elektrischen Maschine 1 kommt durch dieses Übermaß - also die Quetschung der Dämmschicht 12 - zustande. Im gepressten Zustand kann sich im Bereich der Kühlrippen die Dicke 17 der Dämmschicht 12 infolge der Quetschung mindern.

Der Mantel 10 ist ausreichend fest mit der elektrischen Maschine 1 verbunden, wenn die Pressung an zumindest einem Abschnitt oder mehreren Abschnitten oder über den gesamten Mantel 10 erfolgt.

Infolge der Strömung des Kühlmediums, der elektromagnetischen Anregung und/oder anderer Schallquellen entsteht Schall 38. Der Schall 38 kann in die Dämmschicht 12 eindringen. Der Schall 38 wird innerhalb der Dämmschicht 12 teilweise absorbiert und gedämpft. An der Außenschicht 11 des Mantels 10 kann der von der Dämmschicht 12 kommende Schall 38 teilweise reflektiert werden und gelangt dadurch nicht an die Außenseite des Mantels 10. Das Material der Außenschicht 11 und das Material der Dämmschicht 12 unterscheiden sich mindestens in ihren akustischen Impedanzen, sodass Schall an der Grenzfläche zwischen den beiden Materialien reflektiert werden kann.

Das Material der Dämmschicht kann vibrationsabsorbierende Eigenschaften aufweisen. Mechanische Einwirkungen wie Stöße oder Vibrationen, deren Quellen beispielsweise die elektrische Maschine 1 und/oder der Lüfter 15 und/oder sonstige Fremdeinwirkungen sind, können durch die Dämmschicht 12 gedämpft werden. Dies schützt beispielsweise auch das Statorgehäuse 22 oder die Lager der Rotorwelle vor mechanischer Beschädigung.

FIG 3 zeigt im Prinzip den Sitz der Haube bzw. des Mantels und den Wandaufbau. Die mit Dämmung bezeichnete Außenhaut der Haube kann hierbei aus Metall, Kunststoff oder Verbundwerkstoff (z.B. Bondal oder Stahlblech mit Bitumenschicht) bestehen (je nach mechanischen oder akustischen Anforderungen) oder diese Materialen aufweisen. Wesentlicher Bestandteil der Haube ist der Absorber 12 (insbesondere als ein Schaum ausgeführt). Der Absorber 12 muss nicht zwingend ein Schaum sein - auch andere Stoffe (z.B. Steinwollematten, etc.) können verwendet werden. Der Sitz der Haube auf der Maschine kommt durch ein Übermaß - also die Quetschung des Absorbers - zustande. Zur Sicherheit vor Setzungseffekten (durch Alterung des Schaumes) können Gummis 23 in die Haube eingearbeitet werden, die sich am Maschinengehäuse abstützen und den Presssitz gewährleisten (siehe hierzu FIG 4).

FIG 4 zeigt ein Schnittbild der elektrischen Maschine 1, wobei der Mantel 10, der elastische Elemente 23, 24 aufweist, auf die elektrische Maschine 1 aufgepresst ist. Zur Absicherung gegen Setzungseffekten infolge Alterung des Dämmschichtmaterials sind elastische Elemente 23, 24 in den Mantel 10 eingearbeitet. Die Anordnung der elastischen Elemente 23, 24 kann ringförmig in den Mantel 10 erfolgen. Die elastischen Elemente 23, 24, die beispielsweise aus gummiartigem Material bestehen können, können Presskräfte aufnehmen. Die elastischen Elemente 23, 24 können sich beispielsweise am Statorgehäuse 22, insbesondere an den Kühlrippen 2, 3, 4 abstützen und so den Presssitz gewährleisten. Vorteilhaft an der Pressverbindung kann die kostengünstige Befestigung ohne zusätzliche Schrauben oder Werkzeug sein. Durch die zusätzlichen elastischen Elementen 23, 24 kann zusätzlich eine Dämpfung von Schall und Vibrationen stattfinden.

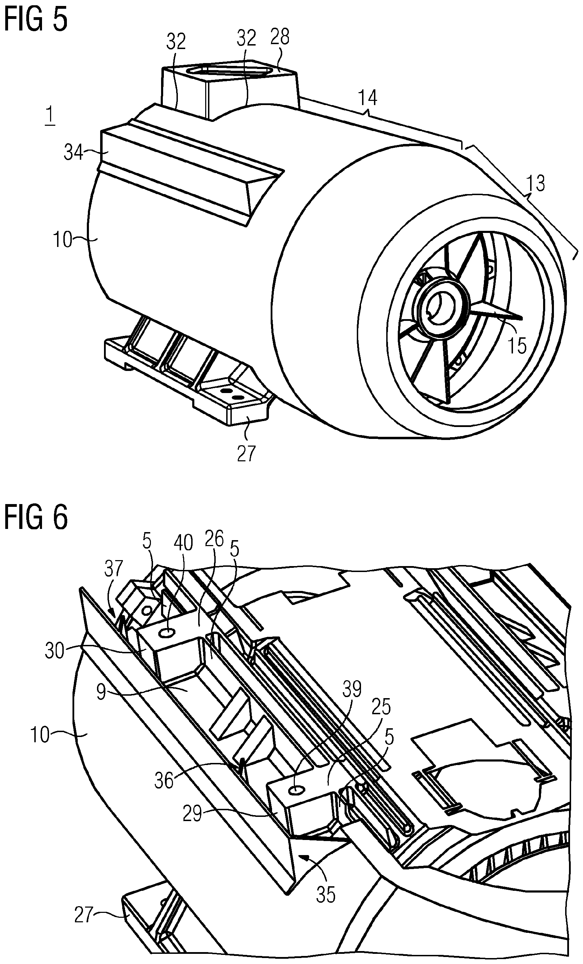

FIG 5 zeigt die elektrische Maschine 1 gemäß FIG 2 mit Klemmkasten 28, Standfuß 27, Lüfter 15 und Mantel 10, wobei der Mantel 10 hier zweigeteilt in Statormantel 14 und Lüftermantel 13 ist.

Die Tragstrukturen 25, 26 überragen in ihrer radialen Ausdehnung die Kühlrippen 2, 3, 4. Der Mantel 10 weist im Bereich der Tragstrukturen 25, 26 daher Aussparungen auf. Die Aussparungen sind mit einem Deckel 34 geschlossen. Zum Transport der elektrischen Maschine 1 nach der Montage des Mantels 10 sollen nach Möglichkeit die Tragstrukturen 25, 26 leicht zugänglich sein. Der Deckel 34 kann daher abnehmbar mit dem Mantel 10 verbunden sein. Der Deckel 34 kann den Schallaustritt aus dem Mantel 10 verhindern.

Der Klemmkasten 28 überragt die radiale Ausdehnung der Kühlrippen 2, 3, 4. Der Mantel 10 hat im Bereich des Klemmkastens 28 eine Aussparung 32. Die Darstellung nach FIG 5 zeigt also eine Ausführung bei der die Angüsse für das Heben durch die Haube umschlossen werden. Diese Angüsse führen gewöhnlich zu einem Strömungsabriss und im Windschatten hinter den Angüssen ist die Kühlung verschlechtert. Durch das Umschließen dieses Bereiches mit der Haube 34 wird die Luft an den Angüssen zwangsweise vorbei geleitet und die Kühlung hinter den Angüssen verbessert.

FIG 6 zeigt im Schnitt die elektrische Maschine 1 mit den Tragstrukturen 25, 26 und Leitfahnen 35, 36, 37. Zwischen Mantel 10, Tragstrukturen 25, 26 und dem Gehäuse der elektrischen Maschine ist ein Kühlkanal 9 ausgebildet. Die Tragstrukturen 25,26 weisen Bohrungen 39, 40 auf, in denen Tragösen zum Transport der elektrischen Maschine geschraubt werden können.

Der montierte Mantel 10 verdeckt in der Regel die Tragstrukturen 25, 26. Damit ein Zugang zu den Tragstrukturen 25, 26 bei montiertem Mantel 10 möglich ist, können Aussparungen 33 in den Mantel 10 an der Stelle der Tragstrukturen 25, 26 angebracht werden, die mit einem abnehmbaren Deckel 34 geschlossen werden können. Die Tragstrukturen 25, 26 führen zu einem Strömungsabriss und im Windschatten hinter den Tragstrukturen 25, 26 kann die Kühlung verschlechtert sein. Durch das Umschließen des Bereichs der Tragstruktur 25, 26 mit dem Mantel 10 kann die Luft zwangsweise an den Tragstrukturen 25, 26 vorbeigeführt werden, wenn Passagen 29, 30 dies ermöglichen. Dadurch kann die Kühlung hinter den Tragstrukturen 25, 26 verbessert werden.

Das Kühlmedium wird im Bereich der Tragstrukturen 25, 26 entlang der Wand des Deckels 34 geführt. Um die Strömung zurück auf die Kühlrippen zu lenken, sind im Deckel 34 Leitfahnen 35, 36, 37 vorhanden. Die Leitfahnen 35, 36, 37 führen das Kühlmedium vor und hinter den Passagen 29, 30. Der Mantel 10 kann äußere Leitfahnen 35 aufweisen, die nur einseitig in Kontakt mit dem vom Lüfter oder einer anderen Förderanlage gefördertem Kühlmedium stehen. Die Leitfahnen 35 lenken das Kühlmedium in Richtung der Passagen 29, 30 und verringern gegebenenfalls den Strömungswiderstand. Innere Leitfahnen 36, 37 lenken das Kühlmedium im Kühlkanal 9 hinter den Tragstrukturen 25, 26 zur elektrischen Maschine beziehungsweise zu den Kühlrippen 5, hin. Die Leitfahnen können beispielsweise als Luftleitbleche ausgeführt sein. Nach FIG 6 sind also im Schnitt Angüsse und Luftleitbleche gezeigt. Soll die Haube nicht erst am Aufstellort montiert werden, so muss sie Öffnungen für die Hebeeinrichtung der Maschine aufweisen.

## Patentansprüche

1. Elektrische Maschine (1) mit Kühlrippen (2,3,4,5), wobei ein Kühlkanal (7,8,9) durch die Kühlrippen (2,3,4,5) und einen Mantel (10) ausgebildet ist, **dadurch gekennzeichnet, dass** Tragstrukturen (25,26) mit dem Mantel (10) eine Passage (29,30) für ein Kühlfluid ausbilden, wobei der Mantel (10) einen Deckel (34) im Bereich der Tragstrukturen (25,26) aufweist, wobei der Deckel (34) eine innere Leitfahne (36,37) aufweist.

2. Elektrische Maschine (1) nach Anspruch 1, wobei der Mantel (10) ein Material aufweist, welches vibrationsabsorbierend ist.

3. Elektrische Maschine (1) nach Anspruch 1 oder 2, wobei der Mantel (10) dicker ist als der Abstand (16) zwischen den Kühlrippen (2,3,4,5).

4. Elektrische Maschine (1) nach einem der Ansprüche 1 bis 3, wobei ein innerer Durchmesser (18) des Mantels (10) kleiner ist als ein äußerer Durchmesser (19), welcher von den Kühlrippen (2,3,4) gebildet ist.

5. Elektrische Maschine (1) nach einem der Ansprüche 1 bis 4, wobei der Mantel (10) auf die Kühlrippen (2,3,4,5) aufgepresst ist, wobei zur Ausübung einer Presskraft der Mantel (10) ein elastisches Material (23,24) insbesondere Gummi aufweist.

6. Elektrische Maschine (1) nach einem der Ansprüche 1 bis 5, mit einem axial angeordneten Lüfter (15), wobei der Mantel (10) den Lüfter (15) umgibt.

7. Elektrische Maschine (1) nach einem der Ansprüche 1 bis 6, wobei der Mantel (10) Polyurethan aufweist.

8. Elektrische Maschine (1) nach einem der Ansprüche 1 bis 7, wobei der Mantel (10) einen Statormantel (14) und einen Lüftermantel (13) aufweist.

9. Elektrische Maschine (1) nach einem der Ansprüche 1 bis 8, wobei der Mantel (10) eine Außenschicht (11) und eine Dämmschicht (12) aufweist.

10. Mantel (10) für eine elektrische Maschine (1) mit Kühlrippen (2,3,4,5), wobei ein Kühlkanal (7,8,9) durch die Kühlrippen (2,3,4,5) und den Mantel (10) ausbildbar ist, **da- durch gekennzeichnet**, dass der Mantel (10) einen Deckel (34) im Bereich von Tragstrukturen (25,26) der elektrischen Maschine (1) aufweist, wobei der Deckel (34) eine innere Leitfahne (36,37) aufweist.

11. Mantel (10) nach Anspruch 10, wobei der Mantel (10) ein Material aufweist, welches vibrationsabsorbierend ist.

12. Mantel (10) nach Anspruch 10 oder 11, wobei der Mantel (10) zur Ausübung einer Presskraft ein elastisches Material (23,24) insbesondere Gummi aufweist.

13. Mantel (10) nach einem der Ansprüche 10 bis 12, wobei dieser hohlzylindrisch ist und eine erste kreisförmige Öffnung aufweist, welche kleiner ist als eine zweite kreisförmige Öffnung.

## Claims

1. Electric machine (1) with cooling fins (2,3,4,5), wherein a cooling duct (7,8,9) is embodied by the cooling fins (2,3,4,5) and a jacket (10), **characterised in that** supporting structures (25,26), along with the jacket (10), embody a passage (29,30) for a cooling fluid, wherein the jacket (10) has a cover (34) in the region of the supporting structures (25,26), wherein the cover (34) has an inner guide lug (36,37).

2. Electric machine (1) according to claim 1, wherein the jacket (10) has a material which absorbs vibration.

3. Electric machine (1) according to claim 1 or 2, wherein the jacket (10) is thicker than the spacing (16) between the cooling fins (2,3,4,5).

4. Electric machine (1) according to one of claims 1 to 3, wherein an inner diameter (18) of the jacket (10) is smaller than an outer diameter (19) which is formed by the cooling fins (2,3,4).

5. Electric machine (1) according to one of claims 1 to 4, wherein the jacket (10) is pressed up against the cooling fins (2,3,4,5), wherein the jacket (10) has an elastic material (23,24), in particular rubber, in order to exert a pressing force.

6. Electric machine (1) according to one of claims 1 to 5, with an axially arranged fan (15), wherein the jacket (10) surrounds the fan (15).

7. Electric machine (1) according to one of claims 1 to 6, wherein the jacket (10) features polyurethane.

8. Electric machine (1) according to one of claims 1 to 7, wherein the jacket (10) has a stator jacket (14) and a fan jacket (13).

9. Electric machine (1) according to one of claims 1 to 8, wherein the jacket (10) has an outer layer (11) and an insulation layer (12).

10. Jacket (10) for an electric machine (1) with cooling fins (2,3,4,5), wherein a cooling duct (7,8,9) can be embodied by the cooling fins (2,3,4,5) and the jacket (10), **characterised in that** the jacket (10) has a cover (34) in the region of the supporting structures (25,26) of the electric machine (1), wherein the cover (34) has an inner guide lug (36,37).

11. Jacket (10) according to claim 10, wherein the jacket (10) has a material which absorbs vibration.

12. Jacket (10) according to claim 10 or 11, wherein the jacket (10) has an elastic material (23,24), in particular rubber, in order to exert a pressing force.

13. Jacket (10) according to one of claims 10 to 12, wherein said jacket (10) is a hollow cylinder and has a first circular opening, which is smaller than a second circular opening.

## Revendications

1. Machine (1) électrique, ayant des ailettes (2, 3, 4, 5) de refroidissement, un canal (7, 8, 9) de refroidissement étant constitué par les ailettes (2, 3, 4, 5) de refroidissement et par une enveloppe (10), **caractérisée en ce que** des structures (25, 26) de support forment avec l'enveloppe (10) un passage (29, 30) pour un fluide de refroidissement, l'enveloppe (10) ayant un couvercle (34) dans la région des structures (25, 26) de support, le couvercle (34) ayant une barbe (36, 37) intérieure conductrice.

2. Machine (1) électrique suivant la revendication 1, dans laquelle l'enveloppe (10) a un matériau, qui absorbe les vibrations.

3. Machine (1) électrique suivant la revendication 1 ou 2, dans laquelle l'enveloppe (10) est plus épaisse que la distance (16) entre les ailettes (2, 3, 4, 5) de refroidissement.

4. Machine (1) électrique suivant l'une des revendications 1 à 3, dans laquelle un diamètre (18) intérieur de l'enveloppe (10) est plus petit qu'un diamètre (19) extérieur formé par les ailettes (2, 3, 4) de refroidissement.

5. Machine (1) électrique suivant l'une des revendications 1 à 4), dans laquelle l'enveloppe (10) est pressée sur les ailettes (2, 3, 4, 5) de refroidissement, dans laquelle, pour appliquer une force de pression, l'enveloppe (10) a une matière (23, 24) élastique, notamment du caoutchouc.

6. Machine (1) électrique suivant l'une des revendications 1 à 5, comprenant un ventilateur (15) disposé axialement, l'enveloppe (10) entourant le ventilateur (15).

7. Machine (1) électrique suivant l'une des revendications 1 à 6, dans laquelle l'enveloppe (10) comporte du polyuréthane.

8. Machine (1) électrique suivant l'une des revendications 1 à 7, dans laquelle l'enveloppe (10) a une enveloppe (14) de stator et une enveloppe (13) de ventilateur.

9. Machine (1) électrique suivant l'une des revendications 1 à 8, dans laquelle l'enveloppe (10) a une couche (11) extérieure et une couche (12) calorifuge.

10. Enveloppe (10) pour une machine (1) électrique ayant des ailettes (2, 3, 4, 5) de refroidissement, un canal (7, 8, 9) de refroidissement pouvant être formé par les ailettes (2, 3, 4, 5) de refroidissement et par l'enveloppe (10), **caractérisée en ce que** l'enveloppe (10) a un couvercle (34) dans la région de structures (25, 26) de support de la machine (1) électrique, le couvercle (34) ayant une barbe (36, 37) intérieure conductrice.

11. Enveloppe (10) suivant la revendication 10, dans laquelle l'enveloppe (10) a un matériau, qui absorbe les vibrations.

12. Enveloppe (10) suivant la revendication 10 ou 11, dans laquelle l'enveloppe (10) a, pour appliquer une force de pression, une matière (23, 24) élastique, notamment du caoutchouc.

13. Enveloppe (10) suivant l'une des revendications 10 à 12, dans laquelle celle-ci est en forme de cylindre tubulaire et a une première ouverture circulaire, qui est plus petite qu'une deuxième ouverture circulaire.
